# EUROPEAN PATENT APPLICATION

(11) **EP 2 444 837 A1**
(43) Date of publication of application: **25.04.2012**
(21) Application number: 10789114.5
(22) Date of filing: 25.01.2010
(51) Int. Cl.: G02F 1/1339, G09F 9/30

(54) **LIQUID CRYSTAL DISPLAY ELEMENT AND MANUFACTURING METHOD THEREOF**

(30) Priority: 16.06.2009 JP 2009143021
(71) Applicant: Sharp Kabushiki Kaisha, Osaka-shi, Osaka 545-8522 (JP)
(72) Inventor: NAGAGAWA, Akira, Osaka-shi Osaka 545-8522 (JP); KOHARA, Yasuhiro, Osaka-shi Osaka 545-8522 (JP)
(74) Representative: Müller - Hoffmann & Partner
(86) International application number: PCT/JP2010/000391
(87) International publication number: WO 2010/146729

(57) **Abstract**

A plurality of columnar spacers 4 configured to maintain a constant gap G between substrates are provided on a color filter substrate 2 of a liquid crystal display device 1. At a tip end of each of the columnar spacers 4 contacting an array substrate 3, a height adjusting portion 5 which is easily deformed as compared to a portion of the columnar spacer 4 other than the tip end portion when the pair of substrates 2, 3 are bonded together is provided.

## Description

### TECHNICAL FIELD

The present invention relates to a liquid crystal display device including a plurality of columnar spacers provided on one of a pair of substrates and configured to maintain a constant gap between the pair of substrates, and to a method for manufacturing the liquid crystal display device.

### BACKGROUND ART

Conventionally, in a liquid crystal display device, after a pair of glass substrates are bonded together with a constant gap, a space between the pair of glass substrates is filled with a liquid crystal material, and an electrical signal is applied to the liquid crystal material. In such a manner, the liquid crystal display device serves a display function. It is known that a gap material such as plastic beads is used in order to maintain the constant gap.

In recent years, a columnar spacer has been used instead of the gap material. The columnar spacer is called a "photo spacer." It is known that the columnar spacer is formed by stacking colored layers or is made of a special material such as photosensitive polyimide, photosensitive acrylic resin, and photosensitive colored resin.

It is known that, since the gap depends on the height of the columnar spacer supporting the pair of substrates, variation in height of the columnar spacer results in variation in gap and, as a result, display quality is degraded.

For example, Patent Document 1 describes a liquid crystal display device in which, in an image display apparatus including columnar spacers provided on one of two substrates and configured to maintain a constant cell gap, the columnar spacers are formed so that a value for a cross-sectional area of the columnar spacer and/or a value for an arrangement interval of the columnar spacers in an edge portion are/is different from a value for a cross-sectional area of the columnar spacer and/or a value for an arrangement interval of the columnar spacers in a pixel portion before the two substrates are bonded together, and a cell gap is uniformized in a center region of the pixel portion and an end region of the pixel portion after the two substrates are bonded.

### CITATION LIST

### PATENT DOCUMENT

PATENT DOCUMENT 1: Japanese Patent Publication No. 2004-198847

### SUMMARY OF THE INVENTION

### TECHNICAL PROBLEM

However, in, e.g., a manufacturing method by photolithography using photosensitive resin in the conventional liquid crystal display device, uneven application of the photosensitive resin is caused when the photosensitive resin is applied to the substrate, resulting in a difference in height among a plurality of columnar spacers. In addition, a difference in thickness of bases of the columnar spacers results in a difference in height among the plurality of columnar spacers.

In Patent Document 1, a gap difference at a boundary between the pixel portion and the edge portion is adjusted by the cross-sectional area and the arrangement interval. However, a constant gap still cannot be maintained in a case where there is variation in height among the plurality of columnar spacers in the pixel portion or variation in height among the plurality of columnar spacers in the edge portion.

When a difference in height among the plurality of columnar spacers is caused as described above, there is still a problem that an uneven display is caused in the liquid crystal display device.

The present invention has been made in view of the foregoing, and it is an objective of the present invention to maintain a constant gap between a pair of substrates with a simple configuration to prevent an uneven display.

### SOLUTION TO THE PROBLEM

In order to accomplish the foregoing objective, a height adjusting portion is provided at a tip end of a columnar spacer in the present invention.

Specifically, a first or second aspect of the invention is intended for a liquid crystal display device including a plurality of columnar spacers provided on one of a pair of substrates and configured to maintain a constant gap between the pair of substrates.

Each of the columnar spacers includes, at a tip end contacting the other substrate, a height adjusting portion which is easily deformed as compared to other portion of the columnar spacer when the pair of substrates are bonded together. Alternatively, each of the columnar spacers includes a height adjusting portion at a tip end contacting the other substrate, and the height adjusting portion is deformed when the pair of substrates are bonded together, thereby maintaining the constant gap.

According to the foregoing configuration, even if there is a difference in height among the plurality of columnar spacers provided in the one of the pair of substrates, the height adjusting portion formed at the tip end of the columnar spacer higher than other columnar spacers first contacts the other substrate and is easily deformed when the pair of substrates are bonded together. This reduces the difference in height among the plurality of columnar spacers, thereby uniformizing the gap between the pair of substrates.

A third aspect of the invention is intended for the liquid crystal display device of the first or second aspect of the invention, in which a step is formed on a surface of a base of the one of the pair of substrates, and a deformation amount of the height adjusting portion of the columnar spacer provided in a region on a higher side of the step is greater than a deformation amount of the height adjusting portion of the columnar spacer provided in a region on a lower side of the step.

According to the foregoing configuration, the step is formed on the base of the one of the pair of substrates. Thus, even if the height of the columnar spacer provided in the region on the higher side of the step is higher than that of the columnar spacer provided in the region on the lower side of the step, the height adjusting portion provided at the tip end of the higher columnar spacer first contacts the other substrate and is deformed when the pair of substrates are bonded together, and therefore the height of the columnar spacer provided at the tip end of the higher columnar spacer becomes substantially equal to that of the columnar spacer provided in the region on the lower side of the step. This reduces the difference in height among the plurality of columnar spacers, thereby uniformizing the gap between the pair of substrates.

A fourth aspect of the invention is intended for the liquid crystal display device of any one of the first to third aspects of the invention, in which a height of the height adjusting portion is greater than 0 and equal to or less than 1.0 µm, and a width of the height adjusting portion is greater than 0 and equal to or less than a half of a tip end width of the columnar spacer.

That is, if the height of the height adjusting portion is greater than 1.0 µm or the width of the height adjusting portion is greater than the half of the tip end width of the columnar spacer, a difference between stiffness of the height adjusting portion and stiffness of a tip end surface of the columnar spacer is decreased, and therefore it is less likely to uniformize the gap. However, according to the foregoing configuration, an appropriate difference between stiffness of the height adjusting portion maintained at the minimum height and width and the stiffness of the tip end surface of the columnar spacer is maintained, thereby realizing easy height adjustment without over-pressing the columnar spacers.

A fifth aspect of the invention is intended for the liquid crystal display device of any one of the first and fourth aspects of the invention, in which the height adjusting portion includes a plurality of protrusions protruding from the tip end of the columnar spacer.

According to the foregoing configuration, the height adjusting portion includes the plurality of protrusions having a cross-sectional area smaller than that at the tip end of the columnar spacer. Thus, the plurality of protrusions are easily deformed as compared to other portion of the columnar spacer, and contribute to uniformization of the heights of the columnar spacers.

A sixth aspect of the invention is intended for the liquid crystal display device of the fifth aspect of the invention, in which the plurality of protrusions are hemispherical bodies.

According to the foregoing configuration, since the plurality of protrusions are the hemispherical bodies, molding of such protrusions by, e.g., a method using a dry film resist and printing is facilitated.

A seventh aspect of the invention is intended for the liquid crystal display device of the fifth aspect of the invention, in which the plurality of protrusions are columnar bodies.

According to the foregoing configuration, since an increase/decrease in cross-sectional area is less likely to occur, the columnar body is suitable for molding by photolithography.

An eighth aspect of the invention is intended for the liquid crystal display device of the fifth aspect of the invention, in which the plurality of protrusions are pyramids.

According to the foregoing configuration, a tip end of the pyramid is sharpened as compared to the hemispherical body and the columnar body. Thus, the tip end of the pyramid is easily deformed with small force, thereby obtaining the suitable height adjusting portion.

A ninth aspect of the invention is intended for the liquid crystal display device of the fifth aspect of the invention, in which the plurality of protrusions are circular bodies.

According to the foregoing configuration, the height adjusting portion can be obtained, which can be molded by the photolithography and is easily deformed with a simple configuration.

A tenth aspect of the invention is intended for a method for manufacturing a liquid crystal display device including a plurality of columnar spacers provided on one of a pair of substrates and configured to maintain a constant gap between the pair of substrates. The manufacturing method includes forming the columnar spacers each including a height adjusting portion at a tip end contacting the other substrate; and bonding the one of the pair of substrates including the columnar spacers to the other substrate while deforming the height adjusting portions, thereby maintaining the constant gap.

According to the foregoing configuration, even if there is a difference in height among the columnar spacers provided in the one of the pair of substrates, the height adjusting portion provided at the tip end of the columnar spacer higher than other columnar spacers therearound first contacts the other substrate and is deformed when the pair of substrates are bonded together, and such a height adjusting portion is deformed until the height thereof reaches the height equal to that of the other columnar spacers. Thus, the gap between the pair of substrates is uniformized.

An eleventh aspect of the invention is intended for the method of the tenth aspect of the invention, in which the columnar spacers each having the height adjusting portion is formed by performing an exposure process by photolithography in a state in which a light shielding film is not provided in portions of an exposure mask corresponding to the height adjusting portions and a semi-transmissive film or a transmissive film is provided in the remaining portions corresponding to the columnar spacers.

According to the foregoing configuration, a photosensitive amount is partially adjusted by using a transmittance difference, and therefore the height adjusting portion can be easily formed so as to protrude from the tip end of the columnar spacer. Note that, when a positive photosensitive resist is used, positions of the transmissive film and the light shielding film in the mask are exchanged.

A twelfth aspect of the invention is intended for the method of the tenth aspect of the invention, in which a plurality of recesses are formed in a protective film of a dry film resist in advance, thereby forming the height adjusting portions.

According to the foregoing configuration, the plurality of recesses are provided in portions of the protective film corresponding to the height adjusting portions in advance, and therefore easy formation of the height adjusting portions having a desired shape in a proper position can be ensured without processing portions of the exposure mask corresponding to the height adjusting portions.

A thirteenth aspect of the invention is intended for the method of the tenth aspect of the invention, in which a plurality of recesses are formed in part of a printing plate corresponding to tip ends of the columnar spacers in advance, thereby forming the columnar spacers each having the height adjusting portion.

According to the foregoing configuration, since the plurality of recesses are simply formed in positions of the printing plate corresponding to the height adjusting portions in advance, the height adjusting portions having the desired shape can be easily formed.

### ADVANTAGES OF THE INVENTION

As described above, according to the present invention, the height adjusting portion is provided on the columnar spacer, and the height adjusting portion is deformed when the pair of substrates are bonded together. In such a manner, the constant gap between the pair of substrates can be maintained with the simple configuration, thereby preventing an uneven display.

### BRIEF DESCRIPTION OF THE DRAWINGS

[FIG. 1] FIG. 1 is an enlarged cross-sectional view of part of a liquid crystal display device, which illustrate a process for bonding a pair of substrates together in an embodiment of the present invention. FIG. 1(a) illustrates the process before the bonding. FIG. 1(b) illustrates the process after the bonding.
[FIG. 2] FIG. 2(a) is an enlarged cross-sectional view illustrating a columnar spacer including a height adjusting portion and a portion therearound. FIG. 2(b) is a plan view of the columnar spacer.
[FIG. 3] FIG. 3 is a view which illustrates an edge portion of the liquid crystal display device and a portion therearound and which correspond to FIG. 1.
[FIG. 4] FIG. 4 illustrates another embodiment in which height adjusting portions are formed by printing. FIG. 4(a) is a cross-sectional view of a printing plate. FIG. 4(b) is a cross-sectional view of columnar spacers and a portion therearound.
[FIG. 5] FIG. 5(a) is a plan view illustrating a shape of a mask for forming a height adjusting portion on a columnar spacer. FIG. 5(b) is a plan view of the columnar spacer.
[FIG. 6] FIG. 6(a) is a cross-sectional view along a VIa-Via line of FIG. 5(a). FIG. 6(b) is a cross-sectional view along a VIb-VIb line of FIG. 5(b).
[FIG. 7] FIG. 7 is a cross-sectional view of still another embodiment in which height adjusting portions are formed by using a photosensitive resist.
[FIG. 8] FIG. 8 is a view of still another embodiment corresponding to FIG. 2.
[FIG. 9] FIG. 9 is a view of still another embodiment corresponding to FIG. 2.
[FIG. 10] FIG. 10 is a view of still another embodiment corresponding to FIG. 2. FIG. 10(a) is a cross-sectional view along an Xa-Xa line of FIG. 10(b).

### DESCRIPTION OF EMBODIMENTS

An embodiment of the present invention will be described below with reference to the drawings.

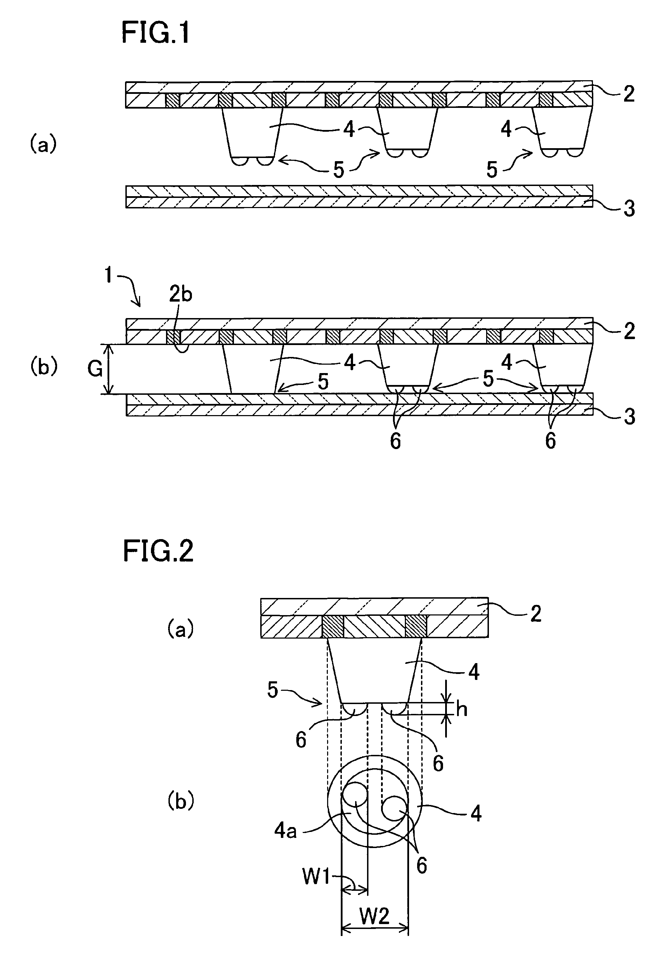

FIG. 1 illustrates a liquid crystal display device 1 of the embodiment of the present invention, and the liquid crystal display device 1 includes a pair of substrates 2, 3. For example, the pair of substrates 2, 3 are a color filter substrate 2 and an array substrate 3, and a plurality of columnar spacers 4 configured to maintain a constant gap G between the pair of substrates 2, 3 are provided on the color filter substrate 2. A liquid crystal material (not shown in the figure) is sealed in the gap G maintained constant by the columnar spacers 4.

As a feature of the present embodiment, the columnar spacer 4 is in a conical trapezoidal shape and includes a height adjusting portion 5 at a tip end contacting the array substrate 3. The shape of the columnar spacer may be a quadrangular prism shape or a cylindrical shape as long as the height adjusting portion can be formed on an upper base thereof. The columnar spacer 4 is formed by stacking colored layers or is made of a special material such as photosensitive polyimide, photosensitive acrylic region, and photosensitive colored resin by, e.g., photolithography, a dry film resist, or printing. The height of the columnar spacer 4 is, e.g., 3-10 µm, and the width of the columnar spacer 4 is, e.g., 10-50 µm.

Specifically, as illustrated in an enlarged view of FIG. 2, the height adjusting portion 5 includes a plurality of protrusions (two protrusions in the present embodiment) provided on a flat surface 4a at the tip end of the conical trapezoidal portion of the columnar spacer 4, and the protrusions are hemispherical bodies 6. For example, a height h of the hemispherical body 6 is greater than 0 and equal to or less than 1.0 µm (0 < h ≤ 1.0 µm), and a width w1 (outer diameter) of the hemispherical body 6 is greater than 0 and equal to or less than a half of a tip end width w2 of the columnar spacer 4 (0 < w1 ≤ w2/2). By providing the hemispherical bodies 6, the height adjusting portion 5 has a cross-sectional area smaller than that of the conical trapezoidal portion and stiffness less than that of the conical trapezoidal portion, and therefore is deformable when the pair of substrates 2, 3 are bonded together. The height adjusting portion 5 protruding beyond surroundings is deformed, thereby maintaining the constant gap G between the pair of substrates 2, 3.

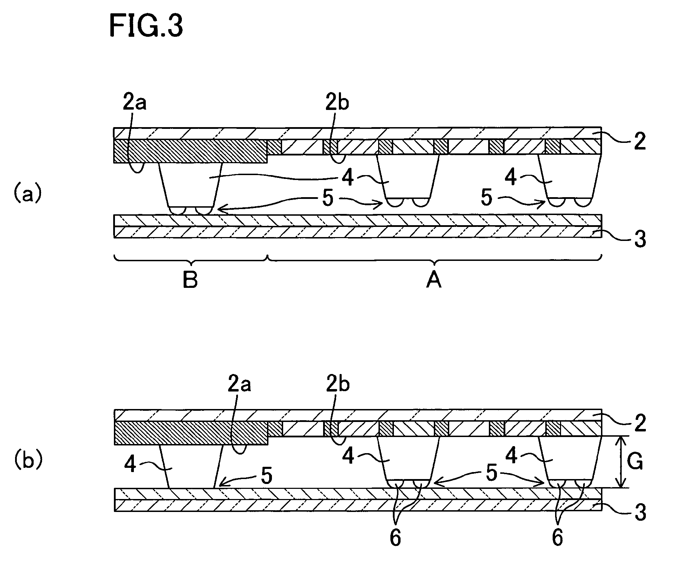

As illustrated in FIG. 3, a level of a surface of a base of the color filter substrate 2 is higher in a circumferential edge portion (edge portion 2a illustrated as a region B in FIG. 3) than in a pixel portion 2b (illustrated as a region A in FIG. 3) provided on an inner side relative to the edge portion 2a, and a step is formed between a surface of the edge portion 2a and a surface of the pixel portion 2b. As a result, the height of the columnar spacer 4 provided in the edge portion 2a is higher than that of the columnar spacer 4 provided in the pixel portion 2b. For example, the height of the step is smaller than 1.0 µm. A deformation amount of the height adjusting portion 5 of the columnar spacer 4 provided in the edge portion 2a is greater than that of the height adjusting portion 5 of the columnar spacer 4 provided in the pixel portion 2b, thereby maintaining the constant gap G between the pair of substrates 2, 3.

### Method for Manufacturing the Liquid Crystal Display Device

Next, a method for manufacturing the liquid crystal display device 1 according to the present embodiment will be described.

First, a plurality of columnar spacers 4 are formed on a color filter substrate 2. In the present embodiment, the columnar spacers 4 and height adjusting portions 5 are formed by, e.g., printing.

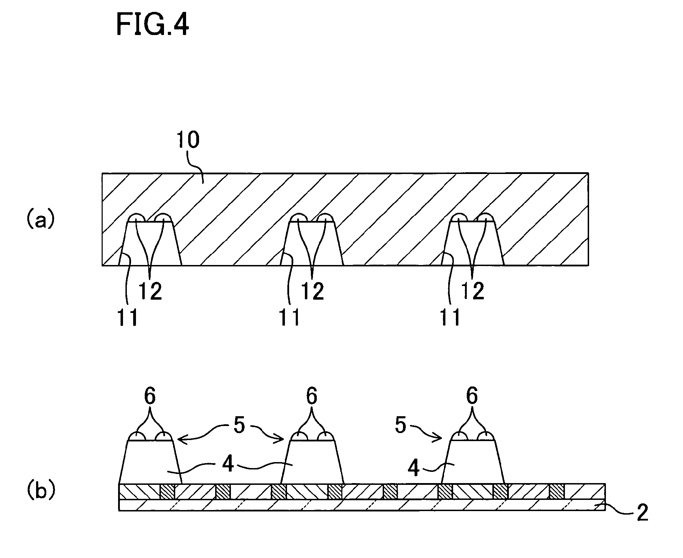

As the printing, there are techniques such as screen printing and flexography. As illustrated in, e.g., FIG. 4(a), recesses 11 corresponding to conical trapezoidal portions of the columnar spacers 4 are formed in part of a printing plate 10 corresponding to the columnar spacers 4 in advance, and a plurality of hemispherical recesses 12 are formed in part of the printing plate 10 corresponding to the flat surfaces 4a formed at the tip ends of the conical trapezoidal portions in advance.

Then, the screen printing or the flexography using the printing plate 10 is performed on the color filter substrate 2. After a printed portion is cured, the columnar spacers 4 in each of which a plurality of hemispherical bodies 6 protrude from the flat surface 4a as illustrated in FIG. 4(b) are formed corresponding to the recesses 11 and the hemispherical recesses 12.

As in the foregoing, since the plurality of hemispherical recesses 12 are simply formed in positions of the printing plate 10 corresponding to the height adjusting portions 5 in advance, the height adjusting portions 5 having a desired shape can be easily formed. In addition, in the present embodiment, since the plurality of protrusions are the hemispherical bodies 6, molding of such protrusions is facilitated.

As illustrated in FIGS. 1(a) and 3(a), the color filter substrate 2 on which the columnar spacers 4 each including the height adjusting portion 5 at the tip end thereof is bonded to an array substrate 3 while applying pressure to the color filter substrate 2.

In the foregoing state, the height of the columnar spacer 4 provided in an edge portion 2a is higher than that of the columnar spacer 4 provided in a pixel portion 2b. Thus, when the pair of substrates 2, 3 are bonded together, the height adjusting portions 5 of the columnar spacers 4 provided in the edge portion 2a first contact the array substrate 3. Since the hemispherical body 6 has stiffness less than that of the conical trapezoidal portion, the hemispherical bodies 6 are pressed and deformed. In such a state, deformation of the height adjusting portions 5 of the columnar spacers 4 provided in the edge portion 2a is larger than that of the height adjusting portions 5 of the columnar spacers 4 provided in the pixel portion 2b. In addition, even if the columnar spacers 4 provided in the edge portion 2a or the columnar spacers 4 provided in the pixel portion 2b are different from each other in height, the height adjusting portion 5 provided at the tip end of the higher columnar spacer 4 is first deformed by contacting a surface of the array substrate 3. Then, by further pressing the pair of substrates 2, 3, the hemispherical bodies 6 protruding beyond other columnar spacers 4 are gradually pressed until the heights of all of the columnar spacers 4 are uniformized. In such a manner, a constant gap G between the pair of substrates 2, 3 is maintained.

The height of the height adjusting portion 5 is greater than 0 and equal to or less than 1.0 µm, and the width w1 of the height adjusting portion 5 is greater than 0 and equal to or less than the half of the tip end width w2 of the columnar spacer 4 (0 < w1 ≤ w2/2). Thus, an appropriate difference between stiffness of the height adjusting portion 5 maintained at the minimum height and width and stiffness of the flat surface 4a of the columnar spacer 4 is maintained, thereby realizing easy height adjustment.

Then, the constant gap G is filled with a liquid crystal material.

According to the liquid crystal display device 1 of the present embodiment, the height adjusting portion 5 is provided in the columnar spacer 4, and the height adjusting portion 5 is deformable when the pair of substrates 2, 3 are bonded together. This maintains the constant gap G between the pair of substrates 2, 3 with a simple configuration, thereby preventing an uneven display.

### First Variation of the Embodiment

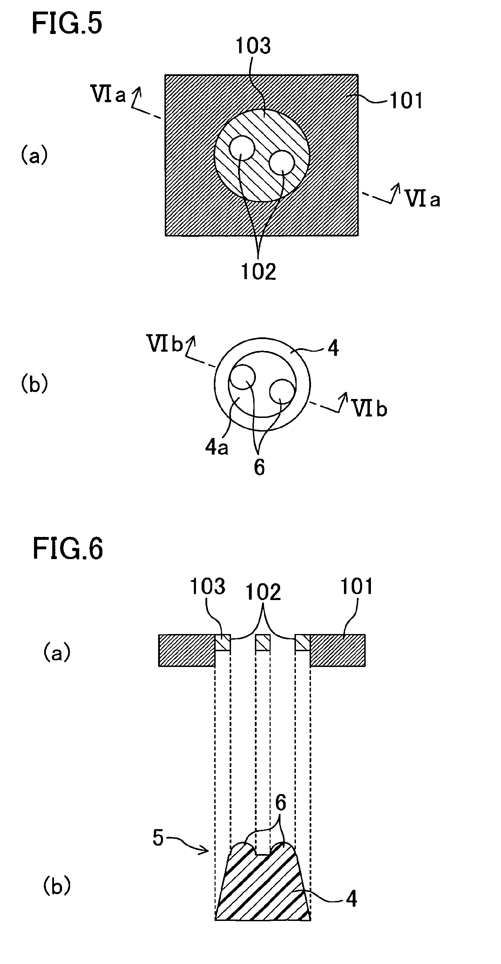

FIGS. 5 and 6 illustrate an exposure process for forming a liquid crystal display device 1 of a first variation of the present embodiment, and the first variation of the present embodiment is different from the foregoing embodiment in a method for forming a height adjusting portion 5. The same reference numerals as those shown in FIGS. 1-3 are used to represent equivalent elements in each of variations described below, and the detailed description thereof will not be repeated.

When columnar spacers are formed by photolithography using a negative photosensitive resist, a columnar spacer 4 having the height adjusting portion 5 is formed by performing the exposure process in a state in which a light shielding film is not provided in a portion 102 of an exposure mask 101 corresponding to the height adjusting portion 5 and a semi-transmissive film or a transmissive film is provided in the remaining portion 103 corresponding to the columnar spacer 4.

As in the foregoing, a photosensitive amount is adjusted partially in the exposure mask 101 by using a transmittance difference, and therefore the height adjusting portion 5 can be easily formed so as to protrude from a tip end of the columnar spacer 4.

### Second Variation of the Embodiment

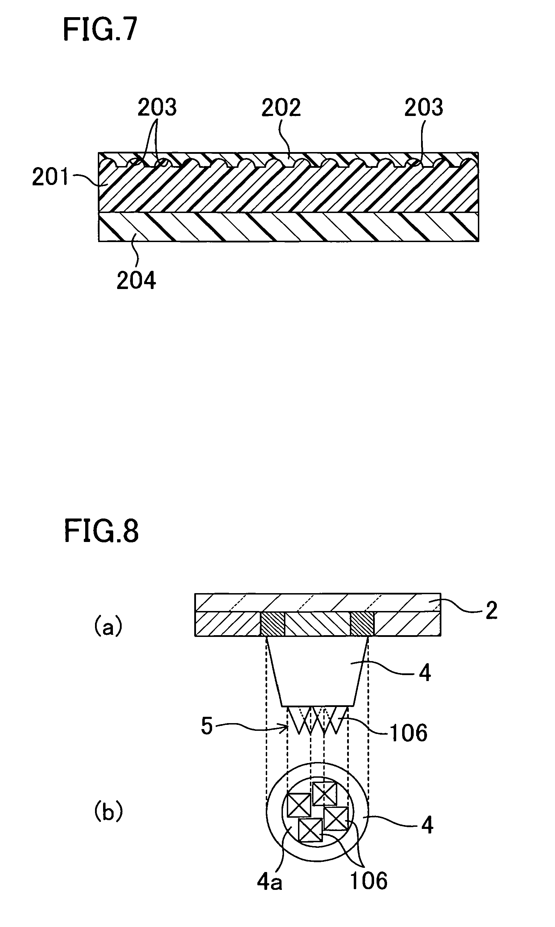

FIG. 7 illustrates a cross section of a dry film resist 201 used for forming a liquid crystal display device 1 of a second variation of the embodiment of the present invention.

In the present variation, columnar spacers 4 and height adjusting portions 5 are formed by the dry film resist 201. Specifically, the columnar spacers 4 and the height adjusting portions 5 are formed, e.g., by arranging a plurality of recesses 203 at regular intervals in a protective film 202 of the dry film resist 201 in advance. Note that the dry film resist 201 is supported by a support film 204.

The plurality of recesses 203 are provided in portions of the protective film corresponding to the height adjusting portions 5 in advance as in the foregoing, and therefore easy formation of the height adjusting portions 5 having a desired shape in a proper position can be ensured by simply exposing portions corresponding to the columnar spacers 4 with light without processing the exposure mask 101 to form the height adjusting portions 5 as in the first variation.

In the present variation, since a plurality of protrusions are hemispherical bodies 6, molding of such protrusions is facilitated.

### (Other Embodiment)

The foregoing embodiment of the present invention may have the following configurations.

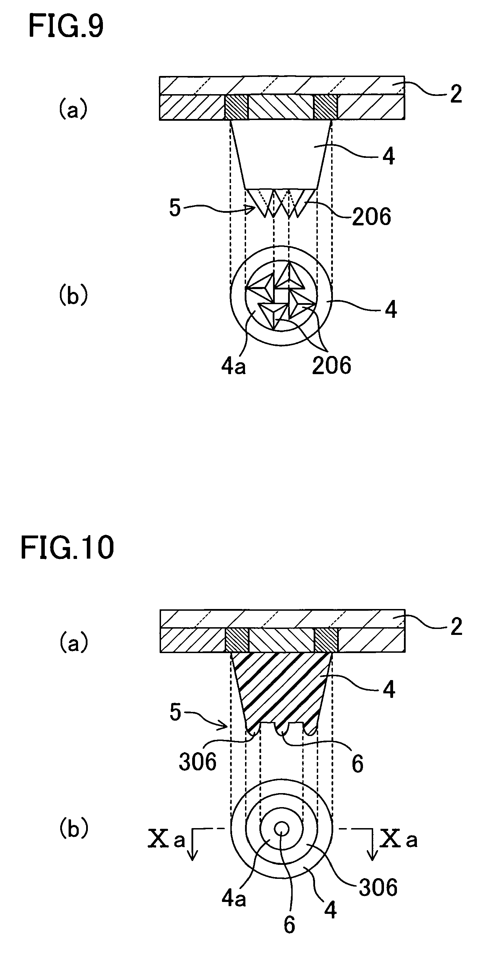

That is, in the foregoing embodiment, the plurality of protrusions provided in the rectangular columnar spacer 4 are the two hemispherical bodies 6, but the number of the protrusions is not limited. The plurality of protrusions may be, e.g., four quadrangular pyramids 106 as illustrated in FIG. 8, or may be, e.g., four triangular pyramids 206 as illustrated in FIG. 9. If the plurality of protrusions are the quadrangular pyramids 106, the triangular pyramids 206, or pyramids such as cones, a tip end thereof is sharpened as compared to the hemispherical bodies 6 and columnar bodies. Thus, the tip end of the protrusion is easily deformed with small force, thereby obtaining the suitable height adjusting portion 5. Note that, in any of the foregoing shapes, the height of the protrusion may be greater than 0 and equal to or less than 1.0 µm, and the width of the protrusion may be greater than 0 and equal to or less than the half of the tip end width of the columnar spacer 4.

As illustrated in FIG. 10, the plurality of protrusions may include a center hemispherical body 6 and a circular body 306 surrounding the hemispherical body 6. Alternatively, the hemispherical body 6 may be a small circular body 306. In such a case, the height adjusting portion 5 can be obtained, which can be molded by the photolithography and is easily deformed with a simple configuration.

Although not shown in the figure, the plurality of protrusions may be columnar bodies. In such a case, since an increase/decrease in cross-sectional area is less likely to occur, the columnar body is suitable for molding by the photolithography.

As described above, the shape of the plurality of protrusions is not limited, and the number of the plurality of protrusions are not also limited as long as two or more protrusions are formed.

Note that the foregoing embodiments have been set forth merely for purposes of preferred examples in nature, and are not intended to limit the present invention or the application or scope thereof.

### INDUSTRIAL APPLICABILITY

As described above, the present invention is useful for the liquid crystal display device including the plurality of columnar spacers provided in one of the pair of substrates, i.e., one of the color filter substrate or the array substrate and configured to maintain the constant gap between the pair of substrates, and to the method for manufacturing the liquid crystal display device.

### DESCRIPTION OF REFERENCE CHARACTERS

- 1: Liquid Crystal Display Device
- 2: Color Filter Substrate (One of a Pair of Substrates)
- 2a: Edge Portion (Step)
- 3: Array Substrate (The Other Substrate)
- 4: Columnar Spacer
- 5: Height Adjusting Portion
- 6: Hemispherical Body (Protrusion)
- 12: Hemispherical Recesses
- 101: Exposure Mask
- 106: Quadrangular Pyramid (Protrusion)
- 201: Dry Film Resist
- 202: Protective Film
- 203: Recesses
- 206: Triangular Pyramid (Protrusion)
- 306: Circular Body (Protrusion)

## Claims

1. A liquid crystal display device, comprising:
a plurality of columnar spacers provided on one of a pair of substrates and configured to maintain a constant gap between the pair of substrates,
wherein each of the columnar spacers includes, at a tip end contacting the other substrate, a height adjusting portion which is easily deformed as compared to other portion of the columnar spacer when the pair of substrates are bonded together.

2. A liquid crystal display device, comprising:
a plurality of columnar spacers provided on one of a pair of substrates and configured to maintain a constant gap between the pair of substrates,
wherein each of the columnar spacers includes a height adjusting portion at a tip end contacting the other substrate, and
the height adjusting portion is deformed when the pair of substrates are bonded together, thereby maintaining the constant gap.

3. The liquid crystal display device of claim 1 or 2, wherein
a step is formed on a surface of a base of the one of the pair of substrates, and
a deformation amount of the height adjusting portion of the columnar spacer provided in a region on a higher side of the step is greater than a deformation amount of the height adjusting portion of the columnar spacer provided in a region on a lower side of the step.

4. The liquid crystal display device of any one of claims 1-3, wherein
a height of the height adjusting portion is greater than 0 and equal to or less than 1.0 µm, and
a width of the height adjusting portion is greater than 0 and equal to or less than a half of a tip end width of the columnar spacer.

5. The liquid crystal display device of any one of claims 1-4, wherein
the height adjusting portion includes a plurality of protrusions protruding from the tip end of the columnar spacer.

6. The liquid crystal display device of claim 5, wherein
the plurality of protrusions are hemispherical bodies.

7. The liquid crystal display device of claim 5, wherein
the plurality of protrusions are columnar bodies.

8. The liquid crystal display device of claim 5, wherein
the plurality of protrusions are pyramids.

9. The liquid crystal display device of claim 5, wherein
the plurality of protrusions are circular bodies.

10. A method for manufacturing a liquid crystal display device including a plurality of columnar spacers provided on one of a pair of substrates and configured to maintain a constant gap between the pair of substrates, the method comprising:
forming the columnar spacers each including a height adjusting portion at a tip end contacting the other substrate; and
bonding the one of the pair of substrates including the columnar spacers to the other substrate while deforming the height adjusting portions, thereby maintaining the constant gap.

11. The method of claim 10, wherein
the columnar spacers each having the height adjusting portion is formed by performing an exposure process by photolithography in a state in which a light shielding film is not provided in portions of an exposure mask corresponding to the height adjusting portions and a semi-transmissive film or a transmissive film is provided in the remaining portions corresponding to the columnar spacers.

12. The method of claim 10, wherein
a plurality of recesses are formed in a protective film of a dry film resist in advance, thereby forming the height adjusting portions.

13. The method of claim 10, wherein
a plurality of recesses are formed in part of a printing plate corresponding to tip ends of the columnar spacers in advance, thereby forming the columnar spacers each having the height adjusting portion.
